# EUROPEAN PATENT APPLICATION

(11) **EP 1 262 920 A2**
(43) Date of publication of application: **04.12.2002**
(21) Application number: 02011593.7
(22) Date of filing: 27.05.2002
(51) Int. Cl.: G06T 15/70

(54) **Method and system for displaying animation in a WAP-WML browser**

(30) Priority: 30.05.2001 JP 2001162626
(71) Applicant: NEC CORPORATION, Tokyo (JP)
(72) Inventor: Shibata, Naoya, Minato-ku, Tokyo (JP); Koga, Manabu, Sawara-ku, Fukuoka-shi, Fukuoka (JP)
(74) Representative: VOSSIUS & PARTNER

(57) **Abstract**

An animation display system (6) displays animation in a WAP-WML browser used in cellular telephone units. The system (6) has an image tag processor (16) for determining the respective values of an animation specifier, a display interval specifier, and at least one image file specifier in an IMG tag (image tag), and indicating an image file name corresponding to the image file specifier; a time measuring unit (17) for indicating a time that has elapsed each time a time interval specified by the display interval specifier has elapsed; and an image display unit (18) for successively displaying images corresponding to the indicated image file names on a display screen (9) each time the time that has elapsed is indicated by the time measuring unit (17). The system (6) displays animation by successively displaying a plurality of still image data in any desired contents.

## Description

The present invention relates to a mobile telephone unit or the like which is called a browser phone having installed therein browser software for displaying various contents, and more particularly to a method of and a system for displaying animation in a mobile telephone unit which uses WAP (Wireless Application Protocol) as a protocol for connection to the Internet environment to display a content described in WML (Wireless Markup Language).

As the mobile communications technology advances, cellular telephone units are finding a wider range of applications from simple voice communications to electronic mail transmission and reception, downloading contents such as picture, image and music data on networks, accessing sites on the Internet, and electronic commerce transactions. One of the protocols available for connection to the Internet environment from cellular telephone units or the like is WAP which is used in cellular telephone networks of cellular telephone service providers in various countries of the world.

On the Internet, HTML (HyperText Markup Language) is widely used as a language for describing contents. According to WAP, WML is used as a language for describing contents. A system which uses WAP and WML, i.e., a WAP-WML system, supports WMLB as a file format for representing images.

However, the WMLB as an image file format does not support moving pictures, and the WML as a markup language can specify only one WMLB file as images to be displayed at a certain location in the displayed screen. Therefore, the conventional WAP-WML system fails to display animation.

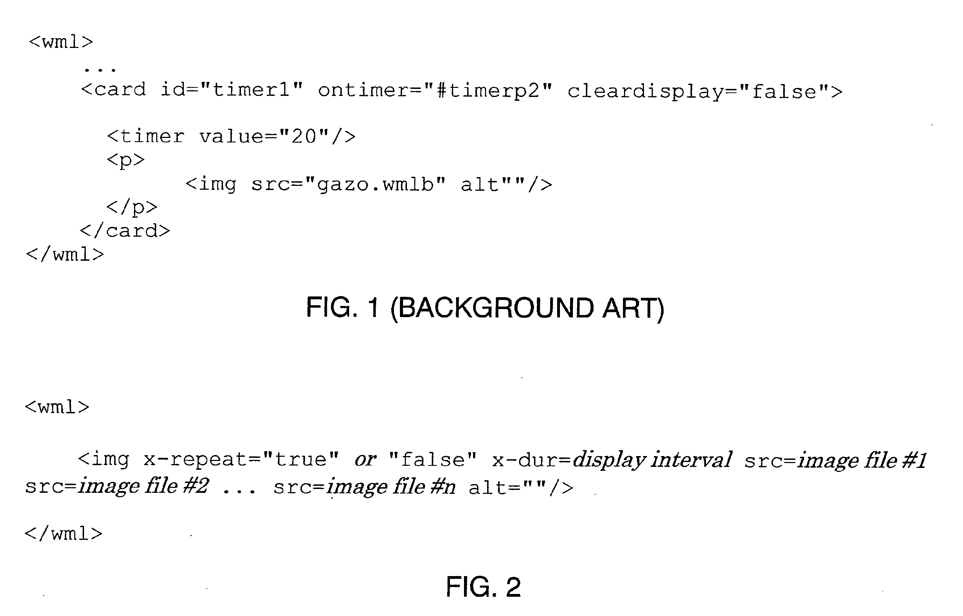

FIG. 1 shows an example of a content described in WML. In this example, the conventional WAP-WML system can specify only one WMLB file with an IMG tag (image tag) as indicated by '*<img src="gazo.wmlb" alt=""*/*>*'.

One technique for displaying animation in the displayed screen on a cellular telephone unit is disclosed in JP-A-2000-115304.

The disclosed system displays frames successively one after another based on animation data already stored in a ROM (Read Only Memory) of the cellular telephone unit, but does not make it possible to display animation in any desired contents downloaded via a network.

Therefore, an object of the present invention is to provide a method of displaying animation by successively displaying a plurality of still image data in any desired contents in a WAP-WML browser that is used by cellular telephone units or the like.

Another object of the present invention is to provide a system for displaying animation by successively displaying a plurality of still image data in any desired contents in a WAP-WML browser that is used by cellular telephone units or the like.

The object of the present invention is achieved by a method of displaying animation in a WAP-WML browser for displaying a content described in WAP-WML, comprising the steps of interpreting an IMG tag in the content and determining the respective values of an animation specifier, a display interval specifier, and at least one image file specifier in the IMG tag, and, if the value of the animation specifier specifies animation display and if there are a plurality of image file specifiers, successively switching the image file specifiers to display images corresponding thereto successively on a display screen at a time interval corresponding to the value of the display interval specifier.

Another object of the present invention is achieved by a system for displaying animation in a WAP-WML browser for displaying a content described in WAP-WML, comprising an image tag processor for interpreting an IMG tag in the content, determining the respective values of an animation specifier, a display interval specifier, and at least one image file specifier in the IMG tag, and indicating an image file name corresponding to the image file specifier, a time measuring unit for indicating a time that has elapsed each time a time interval specified by the display interval specifier has elapsed, and an image display unit for displaying an image corresponding to the image file name indicated by the image tag processor, and if a plurality of image file names are indicated by the image tag processor, successively displaying images corresponding to the indicated image file names on a display screen each time the time that has elapsed is indicated by the time measuring unit.

According to the present invention, a plurality of image files and a time interval can be specified in an image tag (IMG tag) contained in a WML content, and the WAP-WML browser can successively displays images corresponding to the image files at every occurrence of the specified time interval. The method of and the system for displaying animation according to the present invention enable cellular telephone units or the like based on WAP to display animation.

The above and other objects, features, and advantages of the present invention will become apparent from the following description with reference to the accompanying drawings which illustrate an example of the present invention.
FIG. 1 is a diagram showing an example of description of contents in a conventional WAP-WML system;
FIG. 2 is a diagram showing a content description format for displaying animation according to an embodiment of the present invention;
FIG. 3 is a diagram showing an example of an animation definition content;
FIG. 4 is a block diagram of a cellular telephone unit incorporating an animation display system according to an embodiment of the present invention;
FIG. 5 is a block diagram of a browser processor shown in FIG. 4;
FIG. 6 is a diagram showing an example of displayed animation; and
FIG. 7 is a flowchart of an animation displaying sequence of the animation display system.

According to the present invention, a format, described below, is added to WML in order to display animation in a WAP-WML browser.

FIG. 2 shows a content description format for displaying animation in a WAP-WML browser according to a preferred embodiment of the present invention. In this embodiment, as shown in FIG. 2, an animation specifier for specifying whether it specifies animation display or not, and a display interval specifier for specifying a display interval for animation display are added as specifiers to be described in a tag beginning with a character string 'img', i.e., an IMG tag (image tag). Further, a plurality of image file specifiers for specifying image files can be described in one IMG tag in order to specify image files to be displayed successively. The display interval for animation display refers to a time interval from the display of a certain image to the display of a next image. In the illustrated example, the animation specifier is 'x-repeat', the display interval specifier is 'x-dur', and the image file specifiers are 'src'. The animation specifier may be set to one of the values 'true' and 'false'. When the animation specifier is described as *'x-repeat="true"',* it specifies the display of animation using a plurality of image files which have been designated. When the animation specifier is described as *'x-repeat="false"'*, it specifies the non-display of animation. The display interval specifier may be set to a time interval between displayed images, e.g., a numerical value in the unit of a millisecond. When the display interval specifier is described as *'x-dur="200"'*, images displayed on the screen are successively switched one after another at the time interval of 200 milliseconds.

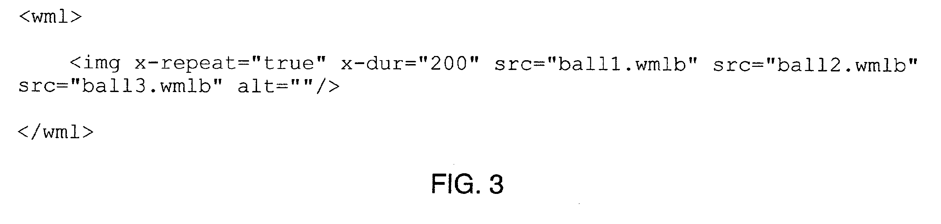

FIG. 3 shows part of a WML source code description in an actual content for displaying animation according to the above description format. In FIG. 3, *'x-repeat="true"'* is described as the animation specifier, *'x-dur="200"'* is described as the display interval specifier, and a plurality of image file specifiers '*src=ball1.wmlb, src=ball2.walb, src=ball3.wmlb'* are described in an IMG tag as an animation defining field. In the example shown in FIG. 3, the animation specifier *'x-repeat="true"'* indicates that animation is to be displayed, and the display interval specifier *'x-dur="200"'* indicates that an image is to be displayed afresh in every 200 milliseconds. The image file specifiers *'src="ball1.wmlb", src="ball2.wmlb", src="ball3.wmlb"'* indicate that an image having a file name 'ball1.wmlb' is to be displayed as a first image, an image having a file name 'ball2.wmlb' is to be displayed as a second image, and an image having a file name 'ball3.wmlb' is to be displayed as a third image. As a result, the specifiers indicate that after the first image 'balll.wmlb' is displayed for 200 milliseconds, it changes to the second image 'ball2.wmlb', and after the second image 'ball2.wmlb' is displayed for 200 milliseconds, it changes to the third image 'ball3.wmlb', and after the third image 'ball3.wmlb' is displayed for 200 milliseconds, it changes to the first image 'ball1.wmlb' again, repeating the above operation.

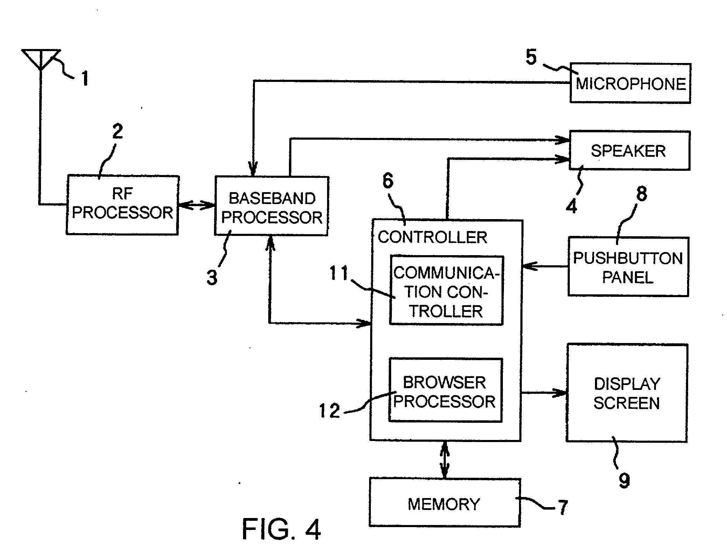

A cellular telephone unit for displaying animation according to the above contents description will be described below. FIG. 4 shows in block form a cellular telephone unit having a WAP-WML browser installed therein and incorporating an animation display system according to an embodiment of the present invention.

As shown in FIG. 4, the cellular telephone unit comprises antenna 1; RF (radio frequency) processor 2 for converting an RF signal received by antenna 1 into a reception baseband signal and outputting the reception baseband signal, and converting an input transmission baseband signal into an RF transmission signal and transmitting the RF transmission signal from antenna 1; baseband processor 3 for processing reception and transmission baseband signals, coding and decoding voice signals, and inputting and outputting non-voice signals; speaker 4 for outputting voice signals decoded by baseband processor 3 and outputting various signal sounds; microphone 5 for receiving voice signals and sending them to baseband processor 3; controller 6 for controlling the cellular telephone unit in its entirety and performing processing operation to display WAP-WML contents; memory 7 for storing telephone directory data and downloaded data of various contents; pushbutton panel 8 connected to controller 6 and including dial buttons and various function buttons; and display screen 9 connected to controller 6 for displaying telephone numbers and contents. Non-voice signals inputted and outputted by baseband processor 3 include network control signals and content data signals. Display screen 9 comprises a liquid crystal display (LCD) panel, for example.

Controller 6 is connected to baseband processor 3 for controlling its operation to make outgoing and incoming calls. When controller 6 receives content data as non-voice signals, it stores the received content data in memory 7. In the present embodiment, content data are described in WAP-WML. A main body of a WAP-WML content, i.e., a body represented by source codes, and image files specified in the main body, i.e., described in an IMG tag, are stored as separate files in memory 7. Controller 6 also generates various signal sounds, which are output from speaker 4.

Controller 6 includes communication controller 11 for processing ordinary outgoing and incoming calls and processing telephone directory data, and browser processor 12 for performing processing operation to display contents downloaded and stored in memory 7 on display screen 9. Browser processor 12 executes the processing of a WAP-WML browser capable of displaying animation. Processing telephone directory data includes registration in the telephone directory and processing of outgoing calls based on the telephone directory data.

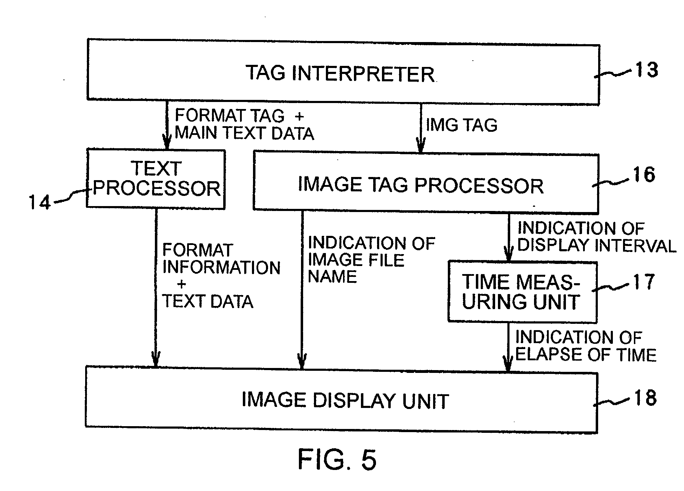

FIG. 5 shows browser processor 12 in a block form. As shown in FIG. 5, browser processor 12 comprises tag interpreter 13 for reading a content described in WAP-WML from memory 7 and interpreting tags in the content, text processor 14 for processing a text portion in the content, and image tag processor 16 for processing IMG tags (image tags). The text portion in a content refers to data of all content data which describe character codes of characters to be displayed on display screen 9 and format information of the characters. Tag interpreter 13 interprets each of the tags contained in the content, sends a tag relative to a format, i.e., a format tag, and code data of the text portion, i.e., main text data, to text processor 14, and sends IMG tags to image tag processor 16.

Text processor 14 determines format information representing the location and size of characters on display screen 9 based on the format tag and the main text, generates text data based on the main text, and sends the format information and the text data to image display unit 18.

Image tag processor 16 identifies an image file specified by an IMG tag, and instructs image display unit 18 to display an image on display screen 9 based on the identified image file. In the present embodiment, particularly, image tag processor 16 determines whether an IMG tag contains an animation specifier, a display interval specifier, and image file specifiers or not, and determines what are the values of these specifiers. If the animation specifier is *'x-repeat="true"',* then image tag processor 16 indicates a display interval specified by the display interval specifier to time measuring unit 17, and indicates image file names specified by the image file specifiers to image display unit 18. If no animation specifier is present or if the animation specifier is *'x-repeat="false"'*, then image tag processor 16 indicates no display interval to time measuring unit 17, and indicates only a single image file name specified by an image file specifier to image display unit 18.

When a display interval is indicated by image tag processor 16, time measuring unit 17 indicates a time that has elapsed in every occurrence of the display interval to image display unit 18. For example, if *'x-dur="200"'* is indicated by image tag processor 16, time measuring unit 17 indicates a time that has elapsed every 200 milliseconds to image display unit 18.

Image display unit 18 performs processing operation to display characters of a content on display screen 9 based on format information and text data (main text) received from text processor 14, and, based on an image file name indicated by image tag processor 16, reads a corresponding image file from memory 7, and performs processing operation to display a corresponding image on display screen 9. If a plurality of image file names are indicated by image tag processor 16, then image display unit 18 changes corresponding images each time the time that has elapsed is indicted by time measuring unit 17, thereby successively displaying the images corresponding to the image file names on the display screen 9.

Browser processor 12 thus arranged makes it possible to display animation of WAP-WML contents.

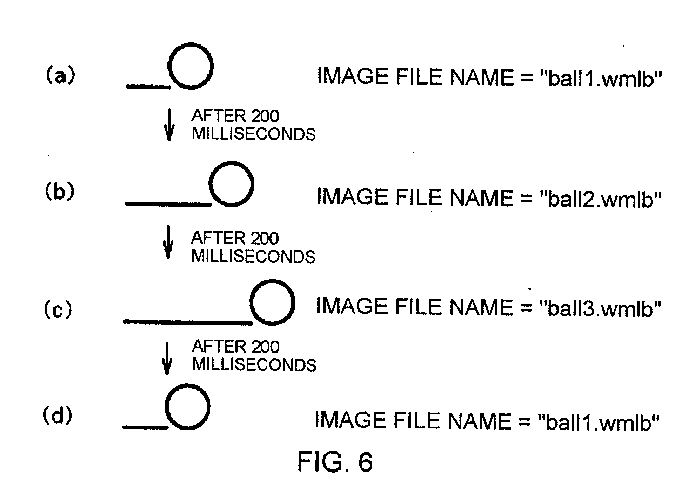

A specific example of animation displayed when a content described as shown in FIG. 3 is given will be described below. FIG. 6 shows the manner in which an image displayed on display screen 9 changes with time.

The description of the content shown in FIG. 3 is interpreted by tag interpreter 13, which sends an IMG tag in the content to image tag processor 16. Image tag processor 16 recognizes from the description in the IMG tag that the value specified by 'x-repeat' is 'true' and hence the IMG tag specifies the display of animation. When image tag processor 16 recognizes the display of animation, it indicates the display interval '200' specified by 'x-dur' to time measuring unit 17, and also indicates three image file names 'ball1.wmlb', 'ball2.wmlb', and 'ball3.wmlb' specified by 'src' to image display unit 18. Here, image file format of these files 'ball1.wmlb', 'ball2.wmlb', and 'ball3.wmlb' is WMLB format and each of these image files represents a still image data.

Based on the time interval '200' indicated by image tag processor 16, time measuring unit 17 indicates a time that has elapsed every 200 milliseconds to image display unit 18.

Image display unit 18 reads, of the image files of the three image file names indicated by image tag processor 6, the first image file (ball1.wmlb) from memory 7, and displays the image of the first image file on display screen 9. The displayed image is shown at (a) in FIG. 6. Upon elapse of 200 milliseconds, time measuring unit 17 indicates the time that has elapsed to image display unit 18. Then, image display unit 18 erases the present image (ball1.wmlb), and reads the second image file (ball2.wmlb) from memory 7, and displays the image of the second image file on display screen 9. The displayed image is shown at (b) in FIG. 6. Upon elapse of next 200 milliseconds, time measuring unit 17 indicates the time that has elapsed to image display unit 18. Then, image display unit 18 erases the present image (ball2.wmlb), and displays the image of the third image file (ball3.wmlb) on display screen 9, as shown at (c) in FIG. 6. Upon elapse of next 200 milliseconds, time measuring unit 17 indicates the time that has elapsed to image display unit 18. Then, image display unit 18 erases the present image (ball3.wmlb), and displays the image of the first image file (balll.wmlb) on display screen 9, as shown at (d) in FIG. 6.

In this manner, animation is displayed based on successively displayed frames.

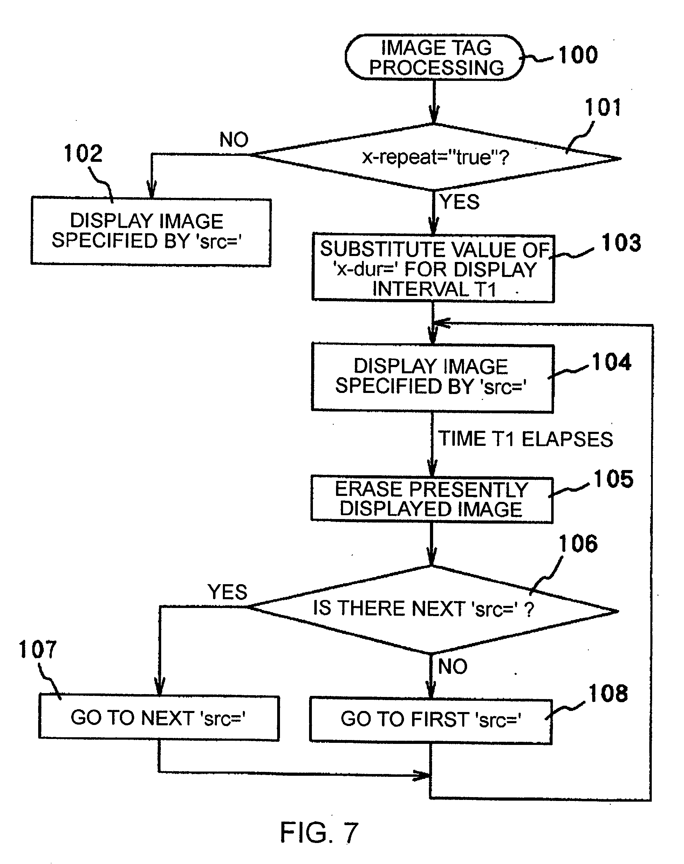

The above animation displaying sequence of the animation display system will be described below with reference to a flowchart shown in FIG. 7.

Browser processor 12 functioning as a WAP-WML browser starts to perform the animation displaying sequence if the description of a content contains an IMG tag in step 100. In step 101, image tag processor 16 refers to the animation specifier, and recognizes the display of animation if *'x-repeat="true"'* and recognizes the display of a still image if otherwise. If image tag processor 16 recognizes the display of a still image, then an image specified by a single image file specifier ('src=') in the IMG tag is displayed on display screen 9 in step 102. If image tag processor 16 recognizes the display of animation in step 101, then image tag processor 16 recognizes the value of the display interval specifier ('x-dur=') as a display interval T1 and sets a time elapse event in every time T1 in step 103. In step 104, image display unit 18 displays an image specified by the first image file specifier. When a time elapse event occurs after elapse of time T1, image display unit 18 erases the presently displayed image in step 105. Image tag processor 16 then determines whether a next image file specifier is contained in the IMG tag in step 106. If a next image file specifier is contained in the IMG tag, then image tag processor 16 searches for a corresponding image file in step 107. Then, control goes back to step 104 to display an image corresponding to the image file which has just been searched for. If no next image file specifier is contained in the IMG tag in step 106, then image tag processor 16 searches for the first image file specifier in the IMG tag in step 108. Then, control goes back to step 104 to display an image corresponding to the image file which has just been searched for.

The above animation display system according to the present embodiment may also be realized by reading a program for realizing the animation display system into a controlling microcomputer system incorporated in the cellular telephone unit and executing the program in the microcomputer system. Such a program may be supplied from a cellular telephone network in a wireless manner, that is, an over-the-air manner, and stored in a memory of the cellular telephone unit. The program stored in the memory of the cellular telephone unit is executed by the microcomputer system, enabling the cellular telephone unit to function as a WAP-WML browser that is capable of performing the above animation display. Alternatively, the program may be stored in a portable physical medium such as a memory card, and the portable physical medium may be mounted on the cellular telephone unit. In this case, when the program stored in the portable physical medium is executed by the controlling microcomputer system, the cellular telephone unit functions as a WAP-WML browser that is capable of performing the above animation display.

While a preferred embodiment of the present invention has been described using specific terms, such description is for illustrative purposes only, and it is to be understood that changes and variations may be made without departing from the spirit or scope of the following claims.

## Claims

1. A method of displaying animation in a WAP-WML browser for displaying a content described in WAP-WML, comprising the steps of:
interpreting an IMG tag in the content and determining respective values of an animation specifier, a display interval specifier, and at least one image file specifier in said IMG tag; and
if the value of said animation specifier specifies animation display and if there are a plurality of image file specifiers, successively switching said image file specifiers to display images corresponding thereto successively on a display screen at a time interval corresponding to the value of said display interval specifier.

2. A method according to claim 1, further comprising the step of, if the value of said animation specifier specifies animation display and after an image corresponding to a final one of the image file specifiers is displayed on the display screen, displaying an image corresponding to a first one of the image file specifiers on the display screen.

3. A method according to claim 1 or 2, wherein each image file specifier corresponds to a single image file which corresponds to a still image data.

4. A method according to claim 3, further comprising the step of, if the value of said animation specifier does not specify animation display, continuously displaying a single image specified by said image file specifier.

5. A system for displaying animation in a WAP-WML browser for displaying a content described in WAP-WML, comprising:
an image tag processor for interpreting an IMG tag in the content, determining respective values of an animation specifier, a display interval specifier, and at least one image file specifier in said IMG tag, and indicating an image file name corresponding to said image file specifier;
a time measuring unit for indicating a time that has elapsed each time a time interval specified by said display interval specifier has elapsed; and
an image display unit for displaying an image corresponding to the image file name indicated by said image tag processor, and if a plurality of image file names are indicated by said image tag processor, successively displaying images corresponding to said indicated image file names on a display screen each time the time that has elapsed is indicated by said time measuring unit.

6. A system according to claim 5, wherein said image display unit comprises means for, if the time that has elapsed is indicated by said time measuring unit after the image corresponding to a final one of said indicated image file names is displayed, displaying the image corresponding to a first one of said indicated image file names.

7. A system according to claim 5 or 6, wherein each image file specifier corresponds to a single image file which corresponds to a still image data.

8. A system according to claim 5 or 6, wherein said image tag processor comprises means for, if the value of said animation specifier specifies animation display, indicating a display interval specified by said display interval specifier to said time measuring unit.

9. A program for enabling a computer to carry out a process comprising the steps of:
interpreting an IMG tag in a content described in WAP-WML and determining the respective values of an animation specifier, a display interval specifier, and at least one image file specifier in said IMG tag; and
if the value of said animation specifier specifies animation display and if there are a plurality of image file specifiers, successively switching said image file specifiers to display images corresponding thereto successively on a display screen at a time interval corresponding to the value of said display interval specifier.

10. A computer readable medium storing a program, said program enabling a computer to carry out a process comprising the steps of:
interpreting an IMG tag in a content described in WAP-WML and determining the respective values of an animation specifier, a display interval specifier, and at least one image file specifier in said IMG tag; and
if the value of said animation specifier specifies animation display and if there are a plurality of image file specifiers, successively switching said image file specifiers to display images corresponding thereto successively on a display screen at a time interval corresponding to the value of said display interval specifier.

11. A mobile telephone unit comprising:
a system for displaying a content described in WAP-WML;
reception means for receiving the contents through an antenna; and
a memory for storing the contents;
said system comprising:
an image tag processor for interpreting an IMG tag in the content, determining respective values of an animation specifier, a display interval specifier, and at least one image file specifier in said IMG tag, and indicating an image file name corresponding to said image file specifier;
a time measuring unit for indicating a time that has elapsed each time a time interval specified by said display interval specifier has elapsed; and
an image display unit for displaying an image corresponding to the image file name indicated by said image tag processor, and if a plurality of image file names are indicated by said image tag processor, successively displaying images corresponding to said indicated image file names on a display screen each time the time that has elapsed is indicated by said time measuring unit.

12. A mobile telephone unit according to claim 11, wherein said mobile telephone unit is a cellular telephone unit.
